# EUROPEAN PATENT SPECIFICATION

(11) **EP 1 218 892 B1**
(45) Date of publication and mention of the grant of the patent: **31.10.2007**
(21) Application number: 00952722.7
(22) Date of filing: 10.08.2000
(51) Int. Cl.: H01B 7/28, H02G 15/00

(54) **FLOW-THROUGH CABLE**
DURCHFLUSSKABEL
CABLE CONTENANT UN ECOULEMENT

(30) Priority: 07.09.1999 US 390967; 13.04.2000 US 548785
(43) Date of publication of application: 03.07.2002
(73) Proprietor: UTILX CORPORATION, Kent, WA 98032 (US)
(72) Inventor: BERTINI, Glen, J., Tacoma, WA 98422 (US); JENKINS, Kim, Issaquah, WA 98027 (US); LANAN, Keith, Renton, WA 98059 (US); JESSEN, Glenn, S., Kirkland, Washington 98034 (US)
(74) Representative: Spall, Christopher John
(86) International application number: PCT/US2000/021930
(87) International publication number: WO 2001/018825

(56) References cited:
- EP-A- 0 621 607
- US-A- 1 846 361
- US-A- 4 888 886

## Description

### Field of the Invention

The present invention relates generally to cables for transmitting information and, more particularly, to a conduit for injection of a compound into the interior of electrical cables.

### Background of the Invention

Underground electrical cable technology was developed and implemented because of its aesthetic advantages and reliability. Currently, underground electrical cables generally include a number of copper or aluminum strands surrounded by a semiconducting or insulating strand shield, a layer of insulation, and an insulation shield.

Underground electrical cables were initially touted as having a useful life of 25-40 years. However, the useful life of such cables has rarely exceeded 20 years, and has occasionally been as short as 10-12 years. In particular, the insulation tends to degrade over time because water enters the cable and forms water trees. Water trees are formed in the insulation when medium to high voltage alternating current is applied to a polymeric dielectric (insulator) in the presence of water and ions. As water trees grow, they compromise the dielectric properties of the polymer until the insulation fails. Many large water trees initiate at the site of an imperfection or a contaminant, but contamination is not a necessary condition for water trees to propagate.

Water tree growth can be eliminated or retarded by removing or minimizing the water or ions, or by reducing the voltage stress. Voltage stress can be minimized by employing thicker insulation. Clean room manufacturing processes can be used to both eliminate ion sources and minimize defects or contaminants that function as water tree growth sites. Another approach is to change the character of the dielectric insulator, either through adding water tree retardant chemicals to the insulator, or by using more expensive, but water tree resistant, plastic and rubbers. Still yet another approach to eliminate or retard water tree growth is to encapsulate the entire electric cable within a conduit having a larger diameter than the electric cable. All of these approaches have merit, but only address the performance of electrical cable yet to be installed.

For electrical cables already underground, the options are more limited. Currently, a dielectric enhancement fluid may be injected into the interstices between the strands of electric cables. The dielectric enhancement fluid reacts with water in the underground cable and polymerizes to form a water tree retardant that is more advanced than those used in the manufacture of modern cables. Although the injection of a dielectric enhancement fluid into the interstices of an electric cable is effective as a water tree retardant, it is not without its problems.

First, the interstices between the strands of the cable may be blocked for a variety of reasons, including the presence of a splice, strand blocking material, or because the strands are highly compacted. As a result, it is often difficult, if not impossible, to inject the dielectric enhancement fluid into the cable. Second, in certain cables having a relatively small diameter, such as underground residential distribution (URD) cables, there is not enough interstitial volume between the strands of the cable to hold sufficient amounts of the dielectric enhancement fluid for maximum dielectric performance. As a result, such cables require an extended soak period of 60 days or more to allow for additional dielectric enhancement fluid to diffuse from the cable strands into the insulation layer. Finally, encapsulating an entire cable within a conduit is expensive.

Thus, there exists a need for a flow-through cable for transmitting information in which a compound can be injected into and distributed throughout, the cable at a relatively low cost, a high degree of reliability, and without interrupting the flow of current through the cable.

We are aware of EP 0621607, which discloses a cable positional within a surrounding conduit. The interstitial void space between the cable and the conduit is filled with a homogeneous mixture of a silane antitreeing agent and dielectric oil.

We are also aware of US 1.846.361 which teaches an apparatus for supplying oil to compensate for the effect of expansion and contraction of a cable due to varying temperatures in load conditions. A section of cable has a plurality of conductors 8 and perforated tubes 11, with one end of the tubes connected to a filler block to force in oil under pressure.

### Summary of the Invention

In accordance with a first aspect of the invention provides a flow-through cable for transmitting information, comprising:
(a) a jacket having a length;
(b) at least one insulation layer disposed within the jacket;
(c) an information conducting core disposed within the jacket; and characterized by the provision of
(d) a first conduit tube disposed within the at least one insulation layer, the first conduit tube adapted to permit a dielectric performance-enhancing compound to flow therethrough and into contact with the information conducting core.

In accordance with a second aspect of the invention provides a method of enhancing performance of a flow-through cable for transmitting information, the method comprising the steps of:
(a) injecting a dielectric performance-enhancing compound into the flow-through cable for transmitting information, wherein the flow-through cable for transmitting information includes a jacket (22), at least one insulation layer disposed within the jacket, a plurality of power strands (26) received within the jacket, a plurality of interstitial spaces (38) between the plurality of power strands (26), and a fist conduit tube disposed within the at least one insulation layer, the first conduit tube adapted to permit the dielectric-performance-enhancing compound to flow therethrough and into contact with at least some of the plurality of power strands; and
(b) applying a catalyst within the plurality of interstitial spaces to control polymerization of the performance-enhancing compound.

A flow-through cable for transmitting information formed in accordance with the present invention has several advantages over electric cables used in the past. First, disposing a first chemically permeable conduit within the cable eliminates the expense of sheathing the power cable within a large conduit. Second, providing a dedicated conduit to distribute a restoration compound throughout the length of a cable ensures an unblocked path through which the restoration compound may flow-through the entire length of the cable. Further, because the chemically permeable conduit is adapted to receive a variety of compounds, such as a desiccant liquid, gas or a tracer fluid, a flow-through cable for transmitting information formed in accordance with the present invention is more robust than those currently available. In summary, a flow-through cable for transmitting information formed in accordance with the present invention is cheaper to maintain and operate, more reliable, and more robust than currently available electric cables.

### BRIEF DESCRIPTION OF THE DRAWINGS

The foregoing aspects and many of the attendant advantages of this invention will become better understood by reference to the following detailed description, when taken in conjunction with the accompanying drawings, wherein:
FIGURE 1 is a perspective view of a flow-through cable for transmitting information formed in accordance with the present invention showing the major components of the electric cable;
FIGURE 2 is a cross-sectional end view of a flow-through cable for transmitting information formed in accordance with the present invention;
FIGURE 3 is a cross-sectional end view of a first alternate embodiment of a flow-through cable for transmitting information formed in accordance with the present invention;
FIGURE 4 is a cross-sectional end view of a second alternate embodiment of a flow-through cable for transmitting information formed in accordance with the present invention;
FIGURE 5 is a cross-sectional end view of a third alternate embodiment of a flow-through cable for transmitting information formed in accordance with the present invention;
FIGURE 6 is a cross-sectional end view of a fourth alternate embodiment of a flow-through cable for transmitting information formed in accordance with the present invention;
FIGURE 7 is a cross-sectional end view of a fifth alternate embodiment of a flow-through cable for transmitting information formed in accordance with the present invention;
FIGURE 8 is a cross-sectional end view of a sixth alternate embodiment of a flow-through cable for transmitting information formed in accordance with the present invention;
FIGURE 9 is a cross-sectional end view of a seventh alternate embodiment of a flow-through cable for transmitting information formed in accordance with the present invention;
FIGURE 10 is a cross-sectional end view of an eighth alternate embodiment of a flow-through cable for transmitting information formed in accordance with the present invention;
FIGURE 11 is a cross-sectional end view of a ninth alternate embodiment of a flow-through cable for transmitting information formed in accordance with the present invention;
FIGURE 12 is a cross-sectional end view of a tenth alternate embodiment of a flow-through cable for transmitting information formed in accordance with the present invention;
FIGURE 13 is a cross-sectional end view of a eleventh alternate embodiment of a flow-through cable for transmitting information formed in accordance with the present invention;
FIGURE 14 is a cross-sectional end view of a twelfth alternate embodiment of a flow-through cable for transmitting information formed in accordance with the present invention;
FIGURE 15 is a cross-sectional end view of a thirteenth alternate embodiment of a flow-through cable for transmitting information formed in accordance with the present invention;
FIGURE 16 is a cross-sectional end view of a fourteenth alternate embodiment of a flow-through cable for transmitting information formed in accordance with the present invention;
FIGURE 17 is a cross-sectional end view of a fifteenth alternate embodiment of a flow-through cable for transmitting information formed in accordance with the present invention;
FIGURE 18 is a perspective view of a sixteenth alternate embodiment of a flow-through cable for transmitting information formed in accordance with the present invention;
FIGURE 19 is a perspective view of a seventeenth alternate embodiment of a flow-through cable for transmitting information formed in accordance with the present invention;
FIGURE 20 is a perspective view of an eighteenth alternate embodiment of a flow-through cable for transmitting information formed in accordance with the present invention;
FIGURE 21 is a perspective view of a nineteenth alternate embodiment of a flow-through cable for transmitting information formed in accordance with the present invention;
FIGURE 22 is a perspective view of a twentieth alternate embodiment of a flow-through cable for transmitting information formed in accordance with the present invention;
FIGURE 23 is a perspective view of a twenty-first alternate embodiment of a flow-through cable for transmitting information formed in accordance with the present invention; and
FIGURE 24 is a cross-sectional view of a flow-through cable for transmitting information formed in accordance with the present invention and showing a catalyst disposed within the interstices of the cable.

### Detailed Description of the Preferred Embodiment

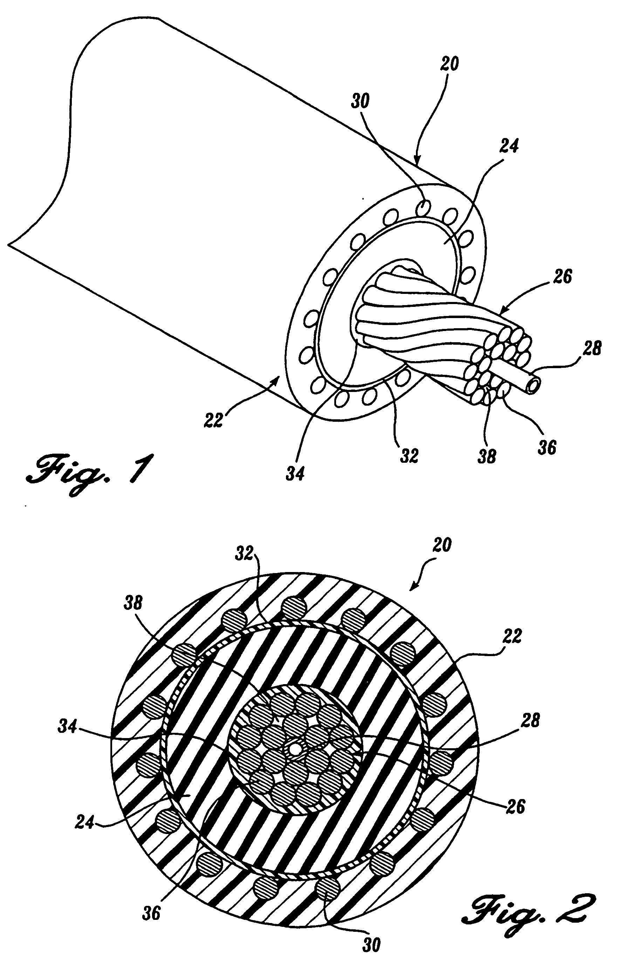

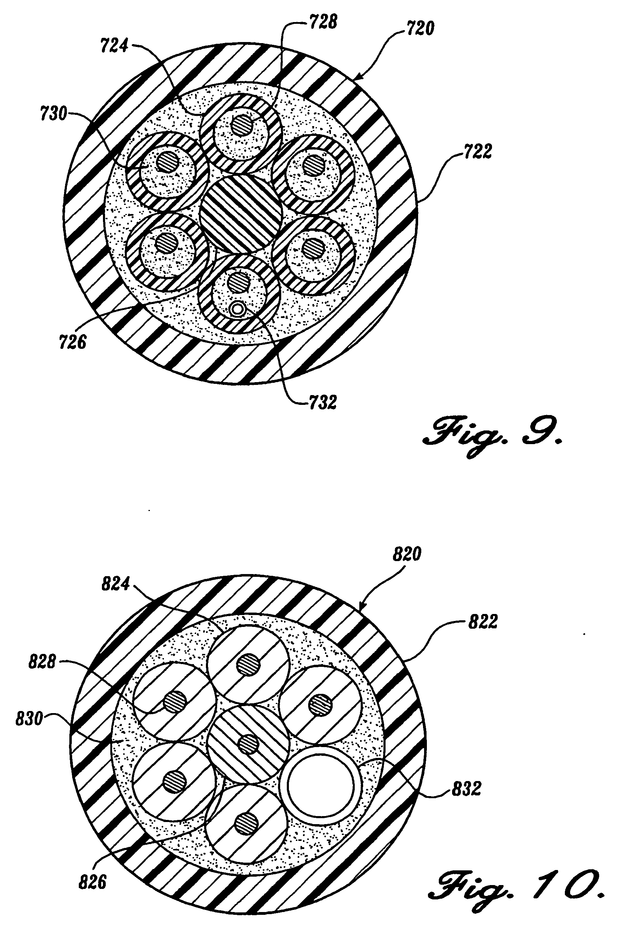

FIGURES 1 and 2 illustrate a preferred embodiment of a flow-through cable for transmitting information (hereinafter "cable 20") constructed in accordance with the present invention. The cable 20 includes a jacket 22, an insulation layer 24, a conductive core 26, and a tube 28. For ease of illustration and clarity, the cable 20 illustrated in FIGURES 1-8 is illustrated as a multiple conductive strand, 1/0-power cable, such as a medium voltage cable that carries between 5,000 and 35,000 volts. Further, the cable 20 illustrated in FIGURE 9 is a fiber optic cable. However, it should be apparent that other types of cables, such as low voltage power cables, transmission voltage power cables, control cables, and communication cables including conductive pair, telephone, and digital communication, are also within the scope of the present invention. Thus, it should be apparent that within the meaning of the present invention, a cable for transmitting information includes not only electric cables, but also light transmitting cables.

The jacket 22 is suitably an elongate tubular member formed from a polyethylene material. As is well-known in the art, a plurality of longitudinally extending conductive neutral wires 30 are embedded within and extend the length of the jacket 22. In the preferred embodiment of FIGURES 1 and 2, a total of 15 conductive neutral wires 30 are disposed annularly around the insulation layer 24.

The insulation layer 24 is suitably formed from a high molecular weight polyethylene (HMWPE) polymer, a cross-linked polyethylene (XLPE), an ethylenepropylene rubber (EPR) or other solid dielectrics, wherein each may include water tree retardants, fillers, anti-oxidants, UV stabilizers, etc. The insulation layer 24 is coaxially disposed within the jacket 22 and extends the length of the jacket 22. Disposed around the perimeter of the insulation layer 24 is an insulation shield 32. The insulation shield 32 is suitably formed from a compound that includes polyethylene or a similar material and extends the length of the jacket 22. Preferably, the insulation shield 32 is disposed between the outside perimeter of the insulation layer 24 and the plurality of conductive neutral wires 30.

The conductive core 26 is coaxially received within the jacket 24 and is centrally located therein. The conductive core 26 is surrounded by a semiconductive or insulating strand shield 34. The strand shield 34 is suitably formed from a compound that includes polyethylene or a similar material and surrounds the conductive core 26, such that it is disposed between the conductive core 26 and the insulation layer 24.

The conductive core 26 includes a plurality of electrically conductive strands 36. Although a plurality of conductive strands 36 is preferred, a cable having a single conductive strand is also within the scope of the present invention. Suitably, the strands 36 are formed from a copper, aluminum, or other conductive material. The cable 20 includes a total of 18 strands wound together to form the conductive core 26, as is well known in the art.

Still referring to FIGURES 1 and 2, the tube 28 will now be described in greater detail. The tube 28 is formed from a chemically permeable material, such as plastics, sintered metals or fiber resin composites in plastic. Suitable plastics include TEFLON^{®}, and NYLON^{®}. Suitable fiber resin composites include KEVLAR^{®}. The tube 28 has sufficient physical strength to be incorporated in the standing operation and sufficient thermal properties for use in maximum and minimum thermal environments in which the cable 20 may be used. Preferably, the tube 28 has the thinnest wall possible to allow compound storage and free flow, is permeable, and can withstand operating and emergency overload design temperatures of 130°C or greater. As a non-limiting example, the wall thickness of the tube 28 is suitably between 0.40 mm and 0.79 mm (1/64 and 1/32 of an inch). Although a cylindrical or nearly cylindrical geometry is the preferred geometry for the tube 28, it should be apparent that other hollow geometries are also included within the scope of the present invention.

As received within the conductive core 26, the tube 28 provides a centrally located, unobstructed and longitudinally extending conduit through the length of the cable 20. The tube 28 is adapted to permit a liquid or gas compound to flow therethrough. Preferably, the tube 28 carries an insulation restoration fluid, such as CABLECURE^{®}/XL, a mixture of phenylmethyldimethoxysilane fluid together with other components or ethoxy or propoxy equivalents. Such insulation restoration fluids are injected into the tube 28 and diffuse through the permeable material of the tube 28 and into the insulation to increase the dielectric properties of the insulation, as described in greater detail below.

As noted above, the tube 28 may also carry a gas or desiccant liquid through the length of the cable 20 to keep the cable 20 dry by removing water or other permeable contaminants. As non-limiting examples, such gas or liquids include dry nitrogen, dry air, dry SF₆, anhydrous alcohols, or other anhydrous organic liquids that are mutually soluble with water. Further, the tube 28 may be injected with a tracer Quid to aid in the identification of a fault or hole in the cable 20. As a non-limiting example, such tracer fluids include, in pure forms or mixtures, helium, SF₆, methane, ethane, propane, butane or any other gas that is detectable with a hydrogen ion detector or a carrier gas, such as nitrogen and a mercaptin. Thus, the tube 28 creates a continuous flow path of permeable membrane to deliver a fluid or gas into the cable 20 along its entire length. The tube 28 can deliver either a fluid or a gas to enhance and prolong the dielectric strength of the insulation layer, or to enhance other cable properties, such as corrosion inhibitation, plasticizers replacement, and anti-oxidation replacement.

In operation, the restoration compound is injected and permitted to flow-through the conduit defined by the tube 28. As the restoration compound flows through the length of the tube 28, the restoration fluid diffuses through the permeable material of the tube 28 and disperses into interstitial space 38 extending between the strands 36 of the conductive core 26. It should be apparent that the interstitial space 38 may be filled with a strand fill material, such as polyisobutylene. Preferably, the interstitial space 38 is filled with a strand fill material. The restoration fluid diffuses into the insulation layer 24 through the conductor shield 34. The restoration fluid chemically combines and polymerizes with any water molecules within the cable 20, thereby increasing the dielectric strength of the insulation.

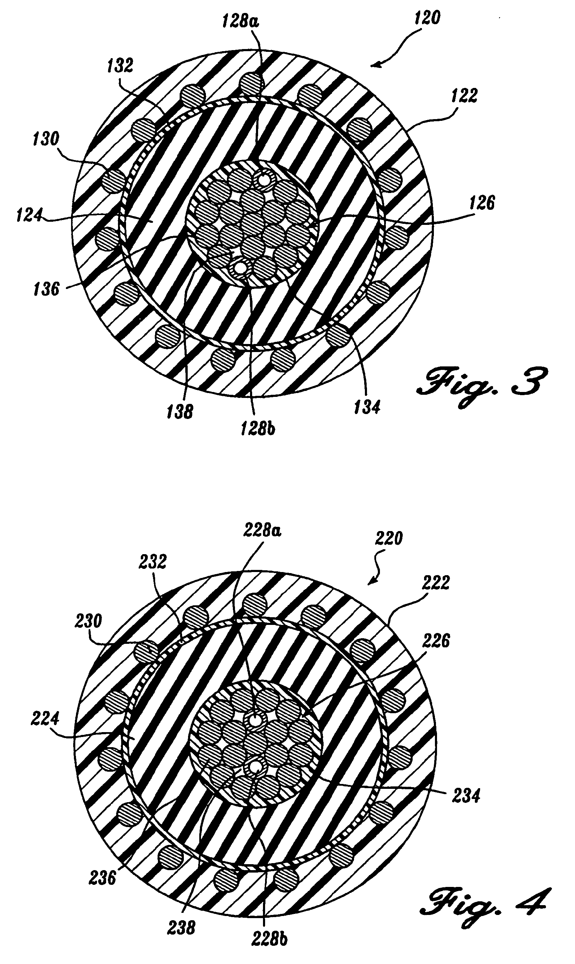

Referring now to FIGURE 3, a first alternate embodiment of a cable 120 formed in accordance with the present invention is illustrated. The cable 120 formed in accordance with the present invention is identical in materials and operation as the preferred embodiment described above, with the following exception. Instead of having a centrally located permeable tube 28, the first alternate embodiment includes first and second chemically permeable tubes 128a and 128b disposed within the conductive core 126. As seen in FIGURE 3, two outer strands 136 of the conductive core 126 have been replaced by the first and second tubes 128a and 128b. Suitably, the number of strands 136 replaced by the tubes 128 may be increased depending upon the diameter of the tube 128 and the amount of restoration fluid required to treat the insulation 124 of the electric cable 120, as well as the frequency of treatment and retreatment.

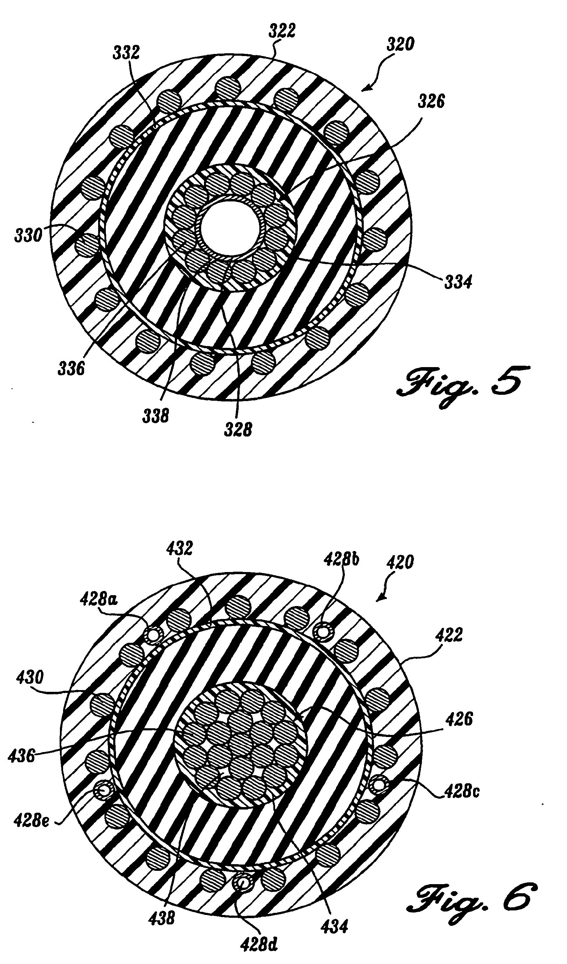

Referring now to FIGURE 4, a second alternate embodiment of a cable 220 formed in accordance with the present invention will now be described in greater detail. The cable 220 is identical in materials and operation as the preferred embodiment described above, with the following exception. As seen in FIGURE 4, two interior strands 236 of the conductive core 226 have been replaced by first and second permeable tubes 228a and 228b.

Referring now to FIGURE 5, a third alternate embodiment of a cable 320 formed in accordance with the present invention will now be described in greater detail. The cable 320 is identical in materials and operation as the preferred embodiments described above for the cable 20, with the following exception. In this third alternate embodiment, two layers of strands 336 have been replaced with a single permeable tube 328. The tube 328 is centrally located within the conductive core 326 and operates in the identical manner described above for the preferred embodiment.

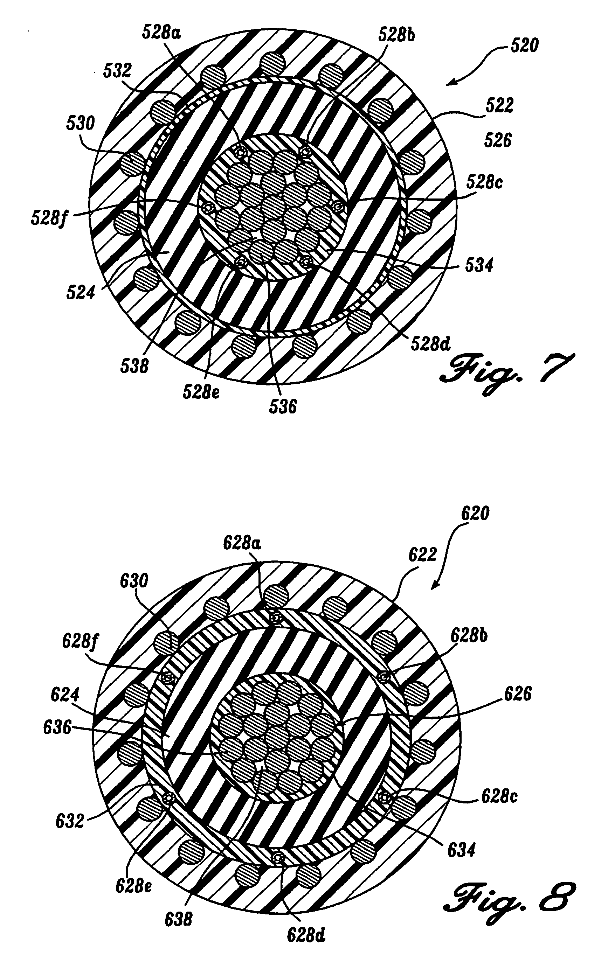

Referring now to FIGURE 6, a fourth alternate embodiment of a cable 420 formed in accordance with the present invention will now be described in greater detail. The cable 420 is identical in materials and operation to the preferred cable 20 described above, with the following exception. In the fourth alternate embodiment, the cable 420 includes a plurality of permeable tubes 428a-428e disposed within the encapsulating jacket 422. Each tube 428a-428e extends longitudinally within the cable 420 and is suitably disposed between adjacent conductive neutral wires 430. If the jacket 422 is not encapsulating, the tubes 428a-428e may be suitably disposed within the annulus between the jacket 422 and the insulation shield 432. It should be apparent that more or less tubes 428 are also within the scope of the present invention.

Referring now to FIGURE 7, a fifth alternate embodiment of a cable 520 formed in accordance with the present invention will now be described in greater detail. The cable 520 is identical in materials and operation as the preferred cable 20 described above, with the following exception. The cable 520 includes a plurality of permeable tubes 528a-528f disposed within the semi-conductive or insulating strand shield 534 and extending longitudinally within the cable 520. The tubes 528a-528f are embedded within the strand shield 534 and operate in the identical manner described above for the preferred embodiment.

Referring now to FIGURE 8, a sixth alternate embodiment of a cable 620 formed in accordance with the present invention will now be described in greater detail. The cable 620 is identical in materials and operation as described above for the preferred cable 20, with the following exception. The cable 620 includes a plurality of chemically permeable tubes 628a-628f disposed within the insulation shield 632. Each tube 628a-628f extends longitudinally within the cable 20 and is embedded within the insulation shield 632. It should be apparent that the diameter and number of tubes 628a-628f may vary according to the geometry of the cable 20, the treatment frequency and the desired circumferential uniformity of the treatment.

Referring now to FIGURE 9, a seventh alternate embodiment of a cable 720 formed in accordance with the present invention will now be described in greater detail. The cable 720 is illustrated as a well-known fiber optic cable. The cable 720 includes a jacket 722, a plurality of buffer tubes 724 and a central strength member or filler 726. Each buffer tube 724 includes at least one fiber optic cable 728. The fiber optic cable 728 is received within the buffer tube 724 and is potted therein by a well-known filler material 730, such as silicone gel. The cable 720 also includes a permeable tube 732 disposed within the gel 730 of at least one buffer tube 724. The permeable tube 732 is identical in materials and operation to the preferred cable 20 described above. Although encapsulating a single permeable tube 732 within one of the buffer tubes 724 is preferred, it should be apparent that a permeable tube may be disposed within more than one buffer tube 724.

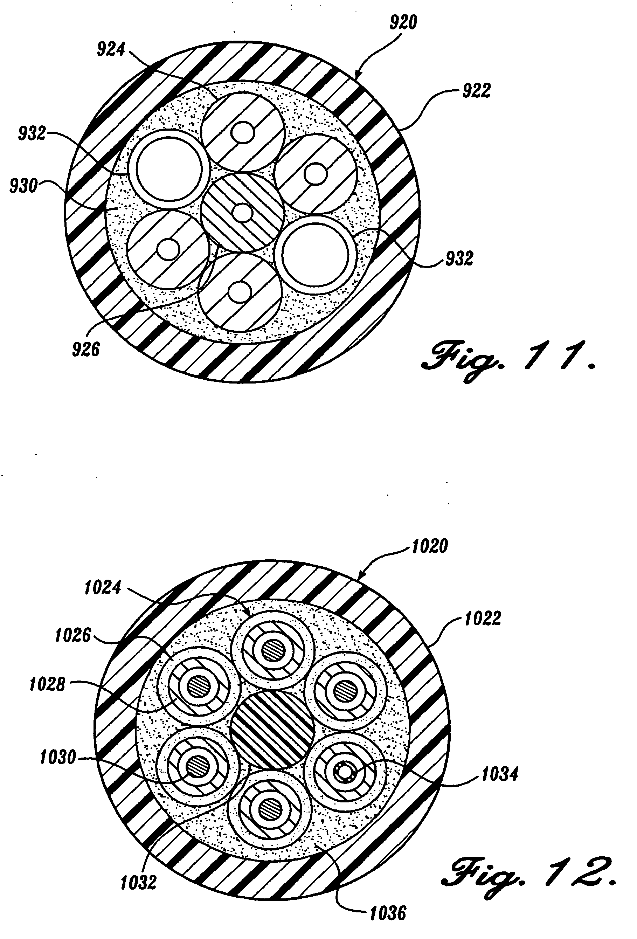

Referring now to FIGURE 10, an eighth alternate embodiment of a cable 820 formed in accordance with the present invention will now be described in greater detail. In the eighth alternate embodiment, the cable 820 includes a jacket 822, a plurality of buffer tubes 824 and a central strength member or filler 826. Each buffer tube 824 includes a fiber 828. As seen in FIGURE 10, the plurality of buffer tubes 824 surround the filler 826 and each tube 824 is surrounded by a well-known flexible strength member 830. Such strength members 830 include flexible aramid yarns, epoxy fiberglass, stainless steel wires, stainless steel mesh, foil tape and plastic rods. The cable 820 is identical in materials and operation to the fiber optic cable 720 described above, with the following exception. In the eighth alternate embodiment, one of the plurality of buffer tubes 824 is replaced with the permeable tube 832. It should be apparent that more than one of the buffer tubes 824 may be replaced with a permeable tube, as seen in FIGURE 11.

The cable 920 illustrated in FIGURE 11 is identical in material and operation as the cable illustrated in FIGURE 10 with the exception that one of the plurality of buffer tubes 924 has been replaced with a second permeable tube 932. It should be apparent that additional buffer tubes may be replaced with another permeable tube, and therefore, such embodiments are also within the scope of the present invention.

Referring now to FIGURE 12 a tenth alternate embodiment of a fiber optic cable 1020 formed in accordance with the present invention will now be described in greater detail. The cable 1020 is identical in materials and operation to the fiber optic cable 720 described above with the following exception. In the tenth alternate embodiment, the cable 1020 includes a plurality of buffer tubes 1024 radially disposed around the perimeter of a central strength member or filler 1032. Each buffer tube 1024 includes an inner jacket 1026, a strength member 1028 and a centrally located fiber 1030. In this embodiment, at least one of the centrally located fibers is replaced with a permeable tube 1034. As described above, the permeable tube 1034 is identical in materials and operation to the preferred cable 20 described above. Although it is preferred that a single fiber is replaced with a permeable tube, other configurations, such as replacing two or three fibers with a permeable tube, are also within the scope of the present invention.

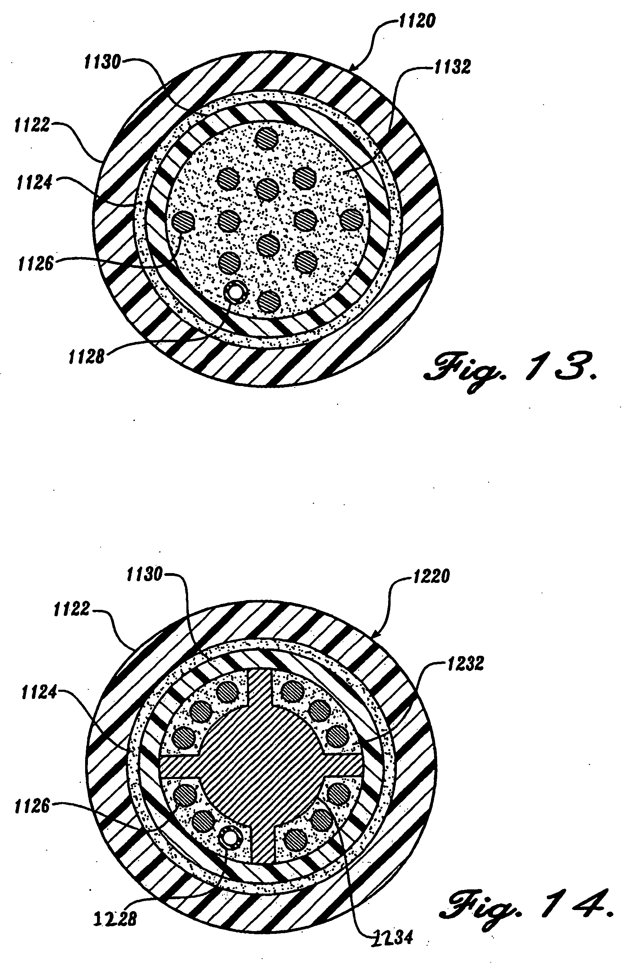

Referring now to FIGURE 13 an eleventh alternate embodiment of a cable 1120 formed in accordance with the present invention will be described in greater detail. The cable 1120 is identical in materials and operation to the fiber optic cable 720 described above, with the following exceptions. The cable 1120 includes a single buffer tube 1130 centrally received within a jacket 1122. A strength member 1124 encapsulates the outside perimeter of the buffer tube 1130. The buffer tube 1130. includes a plurality of fibers 1126 and a well-known filler material 1132. The fibers 1126 are received within the buffer tube 1130 and are surrounded by the filler 1132. The buffer tube 1130 also includes a permeable tube 1128. The permeable tube 1128 is identical in materials and operation to the permeable tube described above for the preferred embodiment and is received within the filler 1132 and extends the length of the cable 1120. It should be apparent that more than one permeable tube 1128 may be disposed within the cable.

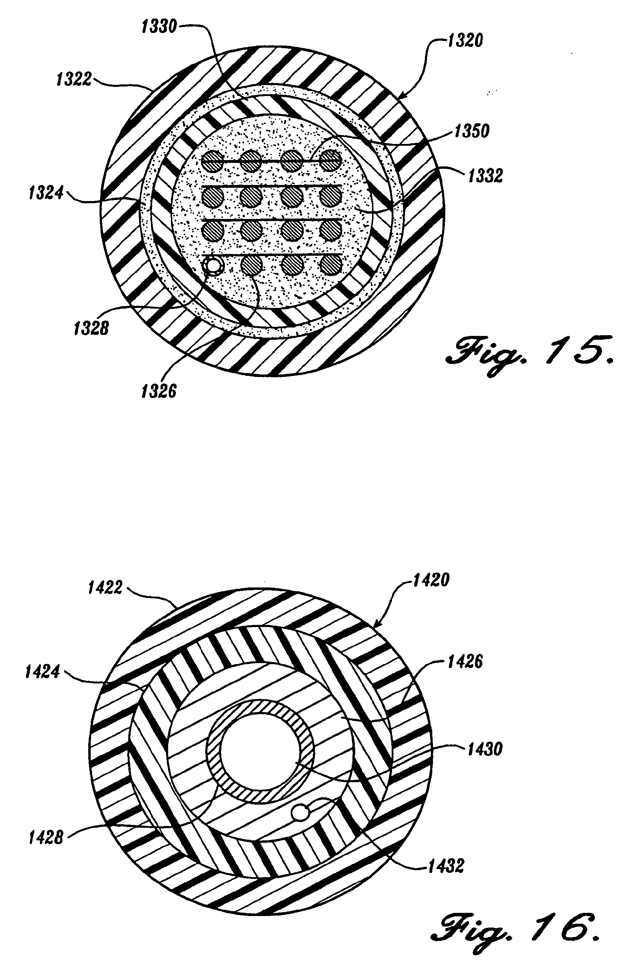

Referring now to FIGURE 14 a twelfth alternate embodiment of a cable 1220 formed in accordance with the present invention will now be described in greater detail. The cable 1220 is identical in materials and operation to the fiber optic described in the alternate embodiment of FIGURE 13, with the following exception. In this embodiment, the cable 1220 includes a core 1234 with helical slots. The core 1234 may be extruded from a well-known material, such as steel, plastic or fiberglass. The cable 1220 also includes a permeable tube 1228 disposed within the cable. Although a cable 1220 having a single tube 1228 is preferred, other configurations, such as two or more permeable tubes, are also within the scope of the invention.

Referring now to FIGURE 15, a thirteenth alternate embodiment of a cable 1320 formed in accordance with the present invention will now be described in greater detail. The cable 1320 is identical in materials and operation to the cable 1220 described above, with the following exception. The cable 1320 includes a plurality of fiber optic cables 1326 strung together in a well known manner, such as by an extruded plastic connector 1350. In this alternate embodiment, a permeable tube 1328 may be attached to one of the plurality of fiber optic cables strung together by the plastic connector. It should be apparent that two or more permeable tubes may be disposed within the cable 1320 and, therefore, is also within the scope of the present invention.

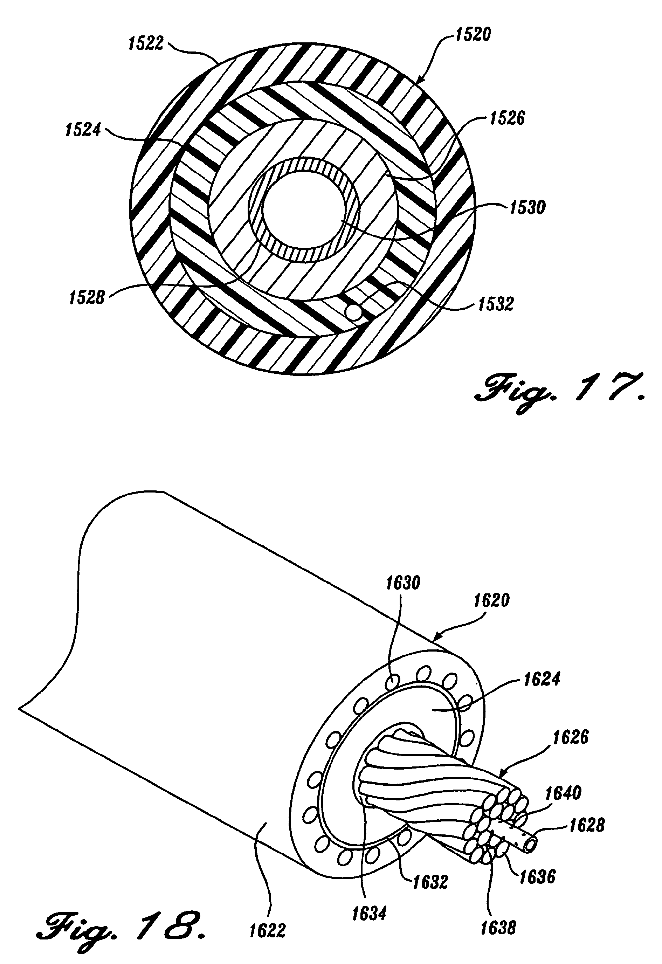

Referring now to FIGURE 16, a fourteenth alternate embodiment of a cable 1420 formed in accordance with the present invention will now be described in greater detail. The cable 1420 is identical in materials and operation to the cable 720 described above, with the following exception. The cable 1420 includes an outer jacket 1422, an inner jacket 1424 and a flexible strength member 1426. The inner jacket 1424 and flexible strength member 1426 are concentrically received within the outer jacket 1422. Centrally received within the flexible strength member 1426, is a buffer jacket 1428 and a fiber 1430. A permeable tube 1432 is disposed within the flexible strength member 1426 and extends the length of the cable 1420. The permeable tube 1432 is identical in materials and operation to the permeable tube described above for the preferred embodiment.

Referring now to FIGURE 17, a fifteenth alternate embodiment of a cable 1520 formed in accordance with the present invention will now be described in greater detail. The cable 1520 is identical in materials and operation to the cable 1420 described above with the following exception. The permeable tube 1532 is disposed within, and is surrounded by the inner jacket 1524. The permeable tube 1532 is identical in material and operation to the preferred cable 20 described above. It should be apparent that more than one permeable tube may be disposed within one or more layers of the cable shown in either FIGURES 16 or 17.

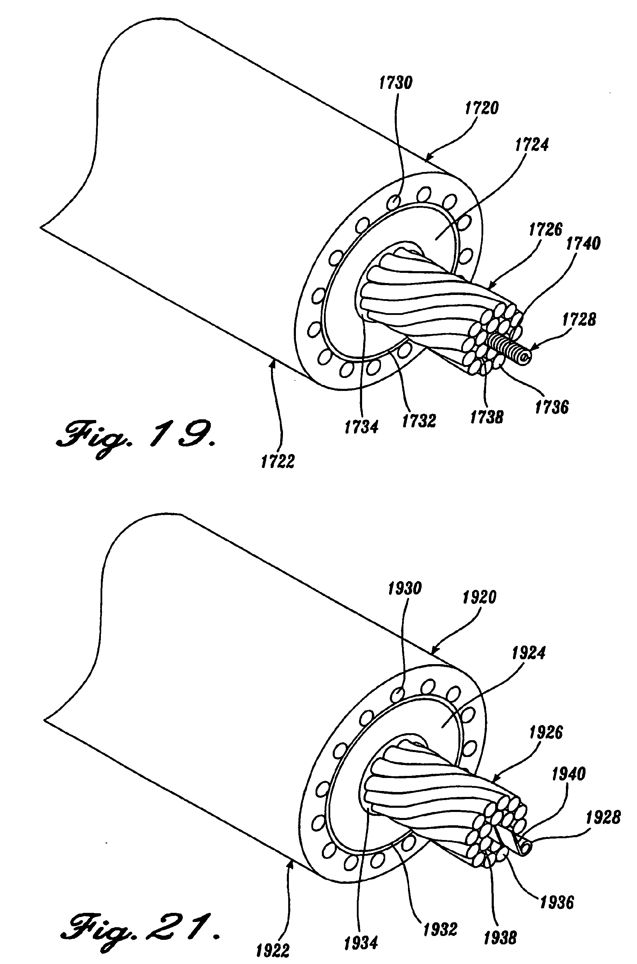

Referring now to FIGURE 18, a sixteenth alternate embodiment of a cable 1620 formed in accordance with the present invention will now be described in greater detail. The cable 1620 is identical in materials and operation to the cable 20 described above with the following exception. Instead of a tube 28 formed from a chemically permeable material, this alternate embodiment includes a perforated tube 1628. The perforated tube 1628 can be made of any suitable material, but a metal or plastic material is preferred. The perforated tube 1628 has a plurality of circular or irregular holes 1640 pierced either mechanically or thermally in a regular or irregular pattern. The circular or irregular holes 1640 have a minimum diameter, dₘᵢₙ, which allows the restoration compound with a spherical particle that has a slightly smaller diameter than dₘᵢₙ to pass therethrough and into contact with the conductive strands 1636.

Referring now to FIGURE 19, another alternate embodiment of a cable 1720 formed in accordance with the present invention will now be described in greater detail. The cable 1720 is identical in materials and operation as the alternate embodiment described above with respect to FIGURE 18, with the following exception. As seen in FIGURE 19, the tube 1628 has been replaced with a nonoverlapping spring conduit 1728. The conduit 1728 is formed from a wound spring created from a cylindrical, rectangular, or flattened cylindrical wire. Restoration fluid passes through seams 1740 between adjacent sections of wire. Restoration fluid is distributed radially through the seams 1740 and into contact with the power strand 1736. Each seam 1740 has a minimum space that allows restoration fluid to pass therethrough.

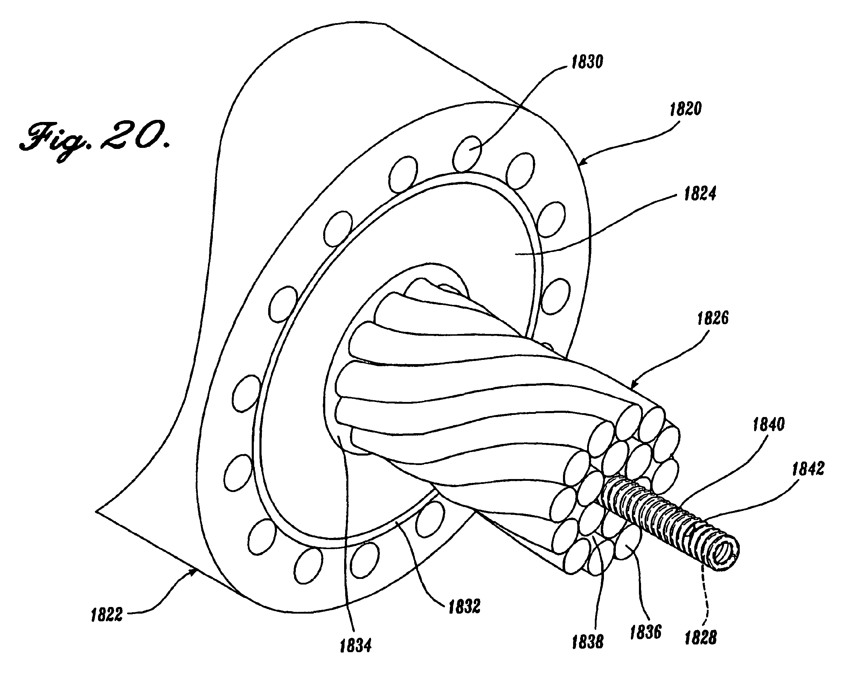

Although a nonoverlapping spring conduit 1728 is suitable, it should be apparent that other embodiments are also within the scope of the present invention. As a nonlimiting example, and referring to FIGURE 20, if an even distribution of enhancement fluid is required, the nonoverlapping spring conduit 1828 may include an elastomeric exterior 1842 sheathing the conduit 1828. The elastomeric exterior 1842 is in compressional deformation when the spring conduct 1828 is in a relaxed state. The elastomeric exterior 1842 reduces seam variation as tension in the conduit 1828 is increased, thereby permitting an even outflow of restoration fluid from the conduit 1828.

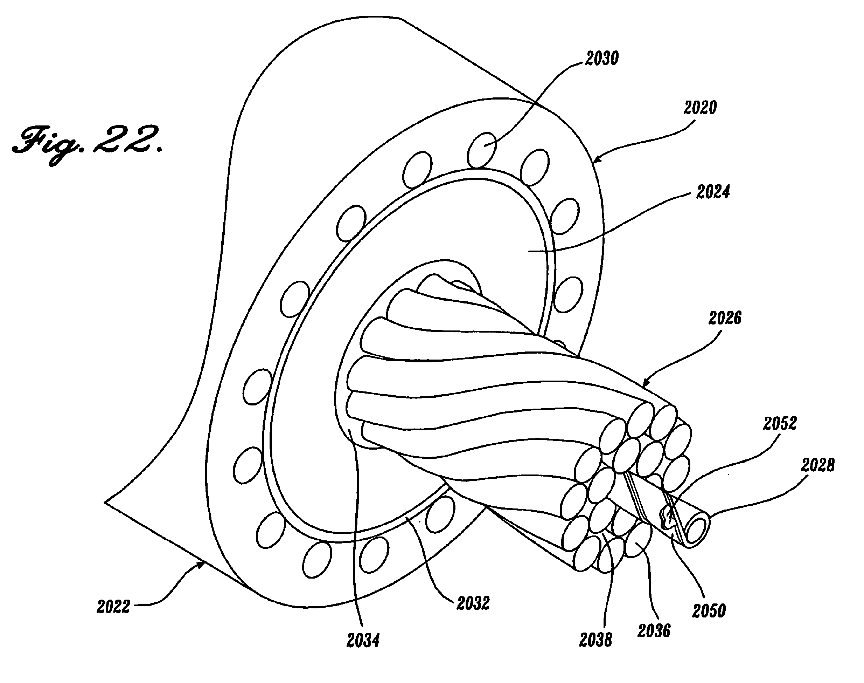

Referring now to FIGURE 21, another alternate embodiment of a cable 1920 formed in accordance with the present invention will now be described. The cable 1920 is identical in materials and operation as the alternate embodiment cable 1720 described above, with the following exception. The cable 1920 includes an overlapping spring conduit 1928.

The overlapping spring conduit 1928 is formed from a metal, plastic, elastomeric, or laminate strip that is wound in an overlapping helix. Restoration fluid passes through a space 1940 between overlapping sections and travels a distance equal to the width of the strip multiplied by the percentage of overlap. As a nonlimiting example, if the spring were made from a one-inch strip and the overlap is 40%, restoration fluid exudes between the helixes for a distance of 10 mm (0.4 inches) before exiting the conduit. The overlap may vary from 0% to 99%, but the preferred embodiment is from 20% to 70%. A 50% overlapping helix, for example, can be stretched almost 100% before there would be any gaps between adjacent helixes.

The overlapping spring conduit 1928 can be varied to accommodate restoration compounds having various particle sizes and rheology. The following properties of the conduit 1928 can be adjusted : strip width ; overlap of the helix; tightness and tolerances of the overlap; nature of the interface between the overlapping helixes; mechanical properties of me spring materials; and interaction of the conduit with the geometry of the surrounding conductive core 1926. The tightness and the surface tolerances of the overlap affect the exudation rate because the microscopic flow paths between two plates effectively vary the minimum distance therebetween. For example, a rough surface would allow more flow than a smooth surface.

Referring now to FIGURE 22, another alternate embodiment of a cable 2020 formed in accordance with the present invention will now be described in greater detail. The cable 2020 is identical in materials and operation as the alternate embodiment cable 1920 described above, with the following exception. The cable 2020 has a centrally located overlapping spring conduit 2028 that includes a layer 2050 and a metallic spring base 2052. Suitably, the layer 2050 is an elastomeric material and is suitably attached to one side of the spring base 2052. Although the spring base 2052 is coated on one side with the layer 2050, other embodiments, such as a layer 2050 on both sides of the spring base 2052, are also within the scope of the present invention.

As noted above, the nature of the interface between overlapping helixes can also be used to control exudation properties. As a nonlimiting example, an overlapping spring made from a metal/elastomeric laminate would restrict fluid flow greater than the spring that had a metal to metal interface between the overlaps. Both the mechanical properties of the spring material and the interaction of the conduit with the power strands affect the radial flow of the enhancement fluid as the internal pressure of the enhancement fluid within the conduit increases. Materials having a greater elasticity will be more apt to deform as the internal pressure increases. As the conduit begins to deform, the layout of the power strands can affect the radial flow of the enhancement fluid. For a nonlimiting example, if the lay of the overlapping spring were right-handed and the strip width and the overlap were chosen to match the lay angle of the overlaying power strands and the strands were also right-handed, an increase in internal pressure would deform the conduit and allow a greater enhancement fluid flow. By changing the lay of the conduit from right-handed to left-handed, the overlaying strands would restrict the deformation of the overlapping spring conduit and, thus, reduce the radial flow through the spring with the same mechanical properties.

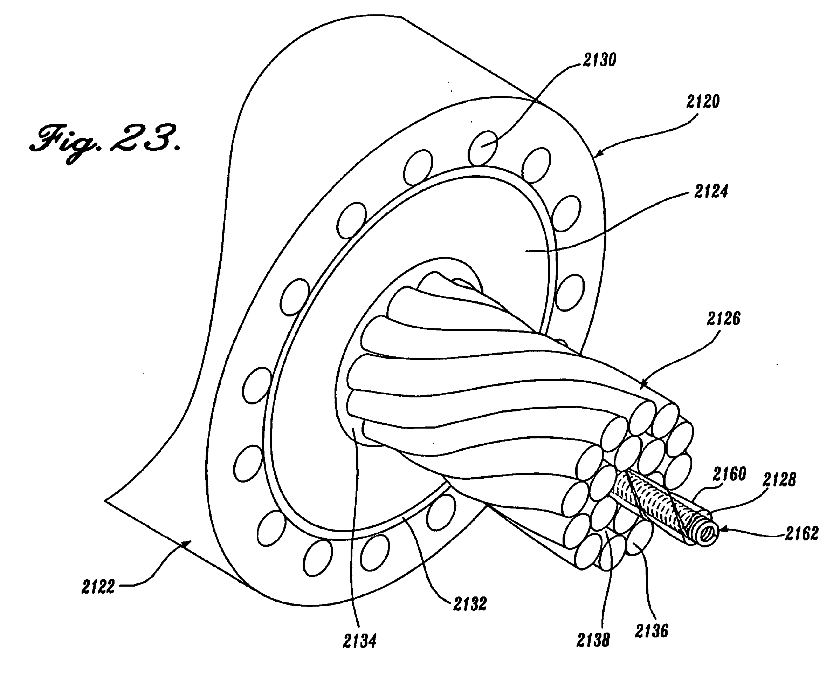

The combination of two or more conduits can be used to enhance the advantages of certain designs and eliminate the disadvantage of others. As a nonlimiting example, a composite conduit 2128, as best seen in FIGURE 23, may incorporate an outer conduit comprising a polymeric overlapping spring conduit 2160 and an inner nonoverlapping spring conduit 2162. The polymeric overlapping spring conduit 2160 can be designed to provide a consistent radial flow rate. However, the metallic nonoverlapping spring conduit 2162 provides radial compression strength to support and protect the outer polymeric conduit 2160 from crushing or kinking.

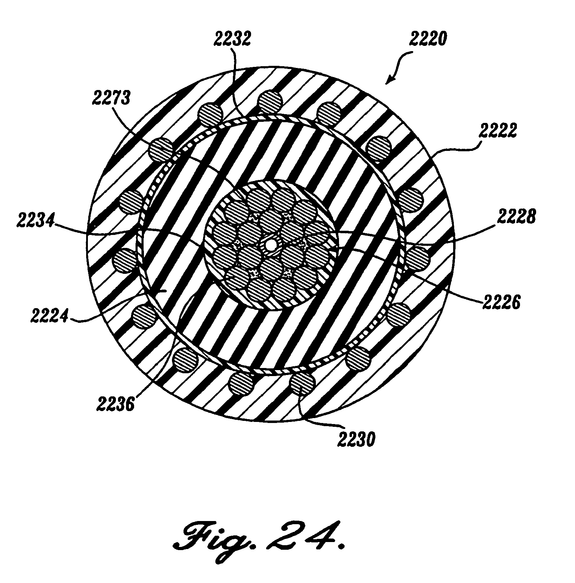

Referring now to FIGURE 24, a method of controlling polymerization of the restoration compound will be described. The speed and polymerization may be controlled by the inclusion of any of several hydrolysis and/or condensation catalysts on the surface of the conduit 2228, on the surface of the power strands 2236, or in the mixture of the strand fill material 2273. Such strand fill material 2273 is suitably included within the interstitial spaces of the strands 2236 during manufacture of the cable 2220. A catalyst may be chosen from a group that includes titanates, such as tetraisopropyltitanate.

The previously described versions of the present invention provide several advantages over cables currently available in the art. First, disposing a permeable tube within the cable eliminates the expense of a large conduit sheathing the outside diameter of the cable, thereby decreasing the installed cost of the cable. Second, disposing tubes within the cable provides a mechanism to extend the life of the cable for less than a cable disposed within a large conduit on both an initial cost and life-cycle cost basis. Further, because the tube is disposed within the existing diameter of a flow-through cable for transmitting information, it has a smaller overall diameter when compared to a cable inserted within a larger diameter conduit and, therefore, permits less expensive installation. Also, providing a dedicated conduit to distribute restoration compounds throughout the length of a flow-through cable for transmitting information ensures an unblocked path by which the compound may flow, thereby enhancing dielectric performance and longevity of the cable. Finally, as the permeable tube is adapted to receive a variety of compounds, a cable formed in accordance with the present invention is more robust than those currently available. Thus, a flow-through cable for transmitting information formed in accordance with the present invention is cheaper to manufacture and operate, is more reliable, and is more versatile than electric cables currently available in the art.

From the foregoing descriptions, it may be seen that a Sow-through cable for transmitting information formed in accordance with the present invention incorporates many novel features and offers significant advantages over currently available electric cables. As a non-limiting example, the size and diameter of the permeable tube may be varied according to the size of the electric cable and the amount of restoration fluid that will be needed to treat the insulation of the particular cable. As a second non-limiting example, a cable formed in accordance with the present invention may not include a jacket 22. Such cables are known as bare concentric neutral cables. As a third non-limiting example, the conduit may be stranded with other conductive strands or may be formed in the stranding operation by extrusion or by leaving a strand or strands absent of conductor and strand filled materials. Alternatively, if the conduit is in a polymer membrane, such as within the shields or within the jacket, the conduit can be extruded in place. In summary, the tubes may be sized differently for each size of cable or the frequency of treatment can be varied to optimize performance.

## Claims

1. A flow-through cable for transmitting information, comprising:
(a) a jacket (22) having a length;
(b) at least one insulation layer (24) disposed within the jacket (22);
(c) an information conducting core (26) disposed within said jacket; and **characterized by** the provision of
(d) a first conduit tube (28) disposed within the at least one insulation layer (24), the first conduit tube adapted to permit a dielectric performance-enhancing compound to flow therethrough and into contact with the information conducting core (26).

2. The flow-through cable for transmitting information of Claim 1, wherein the first conduit tube (28) includes a plurality of perforations, each perforation being sized to permit a predetermined portion of the performance-enhancing compound to pass through each perforation and into contact with the information conducting core (26).

3. The flow-through cable for transmitting information of Claim 2, wherein the information conducting core (26) is a plurality of power strands (36).

4. The flow-through cable for transmitting information of Claim 1, wherein the first conduit tube is a strand of material wound to form a tubular spring (1728), the tubular spring having an exterior surface, an interior surface and a plurality of seams extending between the exterior and interior surfaces, the plurality of seams permitting a predetermined portion of the performance-enhancing compound to pass therethrough and into contact with the information conducting core.

5. The flow-through cable for transmitting information of Claim 4, wherein the information conducting core (1726) is a plurality of power strands (1736).

6. The flow-through cable for transmitting information of Claim 4, wherein the tubular spring (1728) is a non-overlapping spring.

7. The flow-through cable for transmitting information of Claim 4, wherein the tubular spring (1728) is an overlapping spring having overlapping portions and a length.

8. The flow-through cable for transmitting information of Claim 7, wherein the overlapping portions of the tubular spring (1728) form a helical seam extending the length of the tubular spring to permit a predetermined portion of the performance-enhancing compound to pass through the helical seam.

9. The flow-through cable for transmitting information of Claim 6, wherein the non-overlapping spring (1828) includes an elastomeric material (1842) disposed around the non-overlapping spring to permit an even overflow of the performance-enhancing compound through the non-overlapping spring.

10. The flow-through cable for transmitting information of Claim 8, wherein the overlapping spring (1828) includes a first layer of elastomeric material (1842) disposed around the overlapping spring to selectively restrict flow of the performance-enhancing compound through the overlapping spring.

11. The flow-through cable for transmitting information of Claim 1, wherein the information conducting core (1826) is a plurality of power strands (1836) wrapped around a central axis and having a plurality of interstitial spaces between the plurality of power strands.

12. The flow-through cable for transmitting information of Claim 11, wherein a catalyst is applied within the plurality of interstitial spaces (2273) of the flow-through cable for transmitting information to control polymerization of the performance-enhancing compound.

13. The flow-through cable for transmitting information of Claim 12, wherein the catalyst is applied to a surface of the first conduit tube (2228).

14. The flow-through cable for transmitting information of Claim 13, wherein the catalyst is tetraisopropyltitanate.

15. The flow-through cable for transmitting information of Claim 1, further comprising a second conduit tube (228b) disposed within the jacket, the second conduit tube (228b) adapted to permit the performance-enhancement compound to flow therethrough and into contact with the information conducting core.

16. The flow-through cable for transmitting information of Claim 15, wherein the information conducting core is a plurality of power strands (236).

17. The flow-through cable for transmitting information of Claim 15, wherein the first conduit tube is a strand of material wound to form a tubular spring (1828), the tubular spring having an exterior surface, an interior surface and a plurality of seams extending between the exterior and interior surfaces, the plurality of seams permitting a predetermined portion of the performance-enhancing compound to pass therethrough and into contact with the information conducting core and the second conduit tube is an overlapping spring having overlapping portions and a length, wherein the overlapping portions form a helical seam extending the length of the overlapping spring to permit a predetermined portion of the performance-enhancing compound to pass through the helical seam and into contact with the information conducting core (1826).

18. The flow-through cable for transmitting information of Claim 17, wherein the first conduit tube (2162) is coaxially received within the second conduit tube (2128).

19. The flow-through cable for transmitting information of Claim 1 in which the first conduit tube (1628) is disposed within the plurality of information conducting cores, the first conduit tube including a plurality of perforations to permit a predetermined portion of the performance-enhancing compound to diffuse outwardly through the plurality of perforations and into contact with the plurality of information conducting cores.

20. A method of enhancing performance of a flow-through cable for transmitting information, the method comprising the steps of:
(a) injecting a dielectric performance-enhancing compound into the flow-through cable for transmitting information, wherein the flow-through cable for transmitting information includes a jacket (22), at least one insulation layer disposed within the jacket, a plurality of power strands (26) received within said jacket, a plurality of interstitial spaces (38) between the plurality of power strands (26), and a fist conduit tube disposed within the at least one insulation layer (24), the first conduit tube adapted to permit the dielectric-performance-enhancing compound to flow therethrough and into contact with at least some of the plurality of power strands; and
(b) applying a catalyst within the plurality of interstitial spaces to control polymerization of the performance-enhancing compound.

21. The method of enhancing performance of a flow-through cable for transmitting information of Claim 20, wherein the catalyst is applied to a surface of the first conduit tube.

22. The method of enhancing performance of a flow-through cable for transmitting information of Claim 20, wherein the first conduit tube (1628) includes a plurality of perforations, each perforation being sized to permit a predetermined portion of the performance-enhancing compound to pass through each perforation and into contact with the plurality of power strands (1626).

23. The method of enhancing performance of a flow-through cable for transmitting information of Claim 20, wherein the first conduit tube (1828) is a strand of material wound to form a tubular spring, the tubular spring having an exterior surface, an interior surface and plurality of seams extending between the exterior and interior surfaces, the plurality of seams permitting a predetermined portion of the performance-enhancing compound to pass therethrough and into contact with the plurality of power strands (1826).

24. The method of enhancing performance of a flow-through cable for transmitting information, of Claim 20, in which the first conduit tube (1828) is disposed within the plurality of power strands and the first conduit tube is a strand of material wound to form a tubular spring, the tubular spring having an exterior surface, an interior surface and a plurality of seams extending between the exterior and interior surfaces to allow the performance-enhancing compound to exude from the first conduit tube through the plurality of seams to enhance performance of the flow-through cable.

25. The flow-through cable for transmitting information of Claim 1, wherein the jacket (22) is a layer of insulation.

26. The flow-through cable for transmitting information of Claim 25, further comprising a strand shield (34) axially received around the information conducting core to encompass the information conducting core therein.

27. The flow-through cable for transmitting information of Claim 25, wherein the first conduit tube (28) is axially disposed within the information conducting core (26).

28. The flow-through cable for transmitting information of Claim 25, wherein the first conduit tube (428) is disposed around the exterior of a strand shield (434).

29. The flow-through cable for transmitting information of Claim 25, wherein the first conduit tube (1628) includes a plurality of perforations, each perforation being sized to permit a predetermined portion of the performance-enhancing compound to pass through each perforation and into contact with the information conducting core.

30. The flow-through cable for transmitting information of Claim 25, wherein the first conduit tube (1828) is a strand of material wound to form a tubular spring, the tubular spring having an exterior surface, an interior surface and a plurality of seams extending between the exterior and interior surfaces, the plurality of seams permitting a predetermined portion of the performance-enhancing compound to pass therethrough and into contact with the information conducting core (1826).

31. The flow-through cable for transmitting information of Claim 30, wherein the tubular spring is a non-overlapping spring.

32. The flow-through cable for transmitting information of Claim 30, wherein the tubular spring is an overlapping spring having overlapping portions and a length.

33. The flow-through cable for transmitting information of Claim 32, wherein the overlapping portions of the tubular spring form a helical seam extending the length of the tubular spring to permit a predetermined portion of the performance-enhancing compound to pass through the helical seam.

34. The flow-through cable for transmitting information of Claim 31, wherein the non-overlapping spring includes an elastomeric material disposed around the non-overlapping spring to permit an even outflow of the performance enhancing compound through the non-overlapping spring.

## Patentansprüche

1. Durchflusskabel für die Übertragung von Informationen, umfassend:
(a) einen Außenmantel (22), der eine gewisse Länge aufweist;
(b) mindestens eine Isolierstoffschicht (24), die innerhalb des Außenmantels (22) angeordnet ist;
(c) eine informationsführende Kabelader (26), die innerhalb des Außenmantels angeordnet ist; und **gekennzeichnet durch** die Bereitstellung
(d) einer ersten Leitungsröhre (28), die in der mindestens einen Isolierstoffschicht (24) angeordnet ist, wobei die erste Leitungsröhre so angepasst ist, dass sie einer Chemikalie zur Verbesserung der dielektrischen Eigenschaften ermöglicht, dort hindurch zu fließen und in Kontakt mit der informationsführenden Kabelader (26) zu kommen.

2. Durchflusskabel für die Übertragung von Informationen nach Anspruch 1, wobei die erste Leitungsröhre (28) eine Vielzahl von Perforationen aufweist, jede Perforation eine derartige Größe hat, dass es einem vordefinierten Teil der Chemikalie zur Verbesserung der dielektrischen Eigenschaften möglich ist, jede Perforation zu passieren und in Kontakt mit der informationsführenden Kabelader (26) zu kommen.

3. Durchflusskabel für die Übertragung von Informationen nach Anspruch 2, wobei die informationsführende Kabelader (26) aus einer Vielzahl von Starkstrom-Einzelleitern (36) besteht.

4. Durchflusskabel für die Übertragung von Informationen nach Anspruch 1, wobei die erste Leitungsröhre aus einem verlitzten Material besteht, das so gewickelt ist, dass es eine röhrenartige Spiralfeder (1728) bildet, die röhrenartige Spiralfeder eine Außenseite, eine Innenseite und eine Vielzahl von Fugen aufweist, die sich zwischen den Außenseiten und den Innenseiten erstrecken, die Vielzahl der Fugen es einem vordefiniertem Teil der Chemikalie zur Verbesserung der dielektrischen Eigenschaften ermöglicht, dort hindurch zu treten und in Kontakt mit der informationsführenden Kabelader zu kommen.

5. Durchflusskabel für die Übertragung von Informationen nach Anspruch 4, wobei die informationsführende Kabelader (1726) aus einer Vielzahl von Starkstrom-Einzelleitern (1736) gebildet wird.

6. Durchflusskabel für die Übertragung von Informationen nach Anspruch 4, wobei die röhrenartige Spiralfeder (1728) eine überlappungsfreie Spiralfeder ist.

7. Durchflusskabel für die Übertragung von Informationen nach Anspruch 4, wobei die röhrenartige Spiralfeder (1728) eine überlappende Spiralfeder ist, die überlappende Teile und eine gewisse Länge aufweist.

8. Durchflusskabel für die Übertragung von Informationen nach Anspruch 7, wobei die überlappenden Teile der röhrenartigen Spiralfeder (1728) eine spiralförmige Fuge formen, die sich über die Länge der röhrenartigen Spiralfeder erstreckt, um es einem vordefiniertem Teil der Chemikalie zur Verbesserung der dielektrischen Eigenschaften zu ermöglichen, durch die spiralförmige Fuge hindurchzutreten.

9. Durchflusskabel für die Übertragung von Informationen nach Anspruch 6, wobei die überlappungsfreie Spiralfeder (1828) ein elastisches Polymer (1842) umfasst, das um die überlappungsfreie Spiralfeder herum angeordnet ist, um ein gleichmäßiges Überströmen der Chemikalie zur Verbesserung der dielektrischen Eigenschaften aus der überlappungsfreien Spiralfeder zu ermöglichen.

10. Durchflusskabel für die Übertragung von Informationen nach Anspruch 8, wobei die überlappende Spiralfeder (1828) eine erste Lage aus elastischem Polymer (1842) umfasst, welche um die überlappende Spiralfeder herum angeordnet ist, um den Durchfluss der Chemikalie zur Verbesserung der dielektrischen Eigenschaften durch die überlappende Spiralfeder selektiv einzuschränken.

11. Durchflusskabel für die Übertragung von Informationen nach Anspruch 1, wobei die informationsführende Kabelader (1826) aus einer Vielzahl von Starkstrom-Einzelleitern (1836) besteht, die um eine Mittelachse herum gewickelt sind und die eine Vielzahl von Zwischenräumen zwischen der Vielzahl von Starkstrom-Einzelleitern aufweisen.

12. Durchflusskabel für die Übertragung von Informationen nach Anspruch 11, wobei ein Katalysator in die Vielzahl von Zwischenräumen (2273) des Durchflusskabels für die Übertragung von Informationen eingearbeitet ist, um die Polymerisation der Chemikalie zur Verbesserung der dielektrischen Eigenschaften zu steuern.

13. Durchflusskabel für die Übertragung von Informationen nach Anspruch 12, wobei der Katalysator auf eine Oberfläche der ersten Leitungsröhre (2228) aufgebracht ist.

14. Durchflusskabel für die Übertragung von Informationen nach Anspruch 13, wobei der Katalysator Tetraisopropyltitanat ist.

15. Durchflusskabel für die Übertragung von Informationen nach Anspruch 1, weiter umfassend eine zweite Leitungsröhre (228b), die innerhalb des Außenmantels angeordnet ist, wobei die zweite Leitungsröhre (228b) so angepasst ist, dass es der Chemikalie zur Verbesserung der dielektrischen Eigenschaften möglich ist, dort hindurch zu fließen und in Kontakt mit der informationsführenden Kabelader zu kommen.

16. Durchflusskabel für die Übertragung von Informationen nach Anspruch 15, wobei die informationsführende Kabelader aus einer Vielzahl von Starkstrom-Einzelleitern (236) besteht.

17. Durchflusskabel für die Übertragung von Informationen nach Anspruch 15, wobei die erste Leitungsröhre aus einem verlitzten Material besteht, das so gewickelt ist, dass es eine röhrenartige Spiralfeder (1828) bildet, die röhrenartige Spiralfeder eine Außenseite, eine Innenseite und eine Vielzahl von Fugen aufweist, die sich zwischen den Außenseiten und den Innenseiten erstrecken, die Vielzahl der Fugen es einem vordefiniertem Teil der Chemikalie zur Verbesserung der dielektrischen Eigenschaften ermöglicht, dort hindurch zu treten und in Kontakt mit der informationsführenden Kabelader zu kommen, und die zweite Leitungsröhre eine überlappende Spiralfeder ist, die überlappende Teile und eine Länge aufweist, wobei die überlappenden Teile eine spiralförmige Fuge formen, die sich über die Länge der überlappenden Spiralfeder erstreckt, um es einem vordefiniertem Teil der Chemikalie zur Verbesserung der dielektrischen Eigenschaften zu ermöglichen, durch die spiralförmige Fuge hindurch zu treten und in Kontakt mit der informationsführenden Kabelader (1826) zu kommen.

18. Durchflusskabel für die Übertragung von Informationen nach Anspruch 17, wobei die erste Leitungsröhre (2162) von der zweite Leitungsröhre (2128) koaxial aufgenommen wird.

19. Durchflusskabel für die Übertragung von Informationen nach Anspruch 1, bei dem die erste Leitungsröhre (1628) im Inneren der Vielzahl von informationsführenden Kabeladern angeordnet ist, die erste Leitungsröhre eine Vielzahl von Perforationen aufweist, um es einem vordefiniertem Teil der Chemikalie zur Verbesserung der dielektrischen Eigenschaften zu ermöglichen, durch die Vielzahl der Perforationen nach außen zu diffundieren und in Kontakt mit der Vielzahl von informationsführenden Kabeladern zu kommen.

20. Verfahren zur Verbesserung der Eigenschaften eines Durchflusskabels für die Übertragung von Informationen, wobei das Verfahren folgende Schritte umfasst:
(a) Injizieren einer Chemikalie zur Verbesserung der dielektrischen Eigenschaften in das Durchflusskabel für die Übertragung von Informationen, wobei das Durchflusskabel für die Übertragung von Informationen einen Außenmantel (22), mindestens eine Isolierstoffschicht, die im Inneren des Außenmantels angeordnet ist, eine Vielzahl von Starkstrom-Einzelleitern (26), die im Inneren des Außenmantels untergebracht sind, eine Vielzahl von Zwischenräumen (38) zwischen der Vielzahl von Starkstrom-Einzelleitern (26) und eine erste Leitungsröhre innerhalb der mindestens einen Isolierstoffschicht (24) umfasst, wobei die erste Leitungsröhre so angepasst ist, dass es der Chemikalie zur Verbesserung der dielektrischen Eigenschaften möglich ist, dort hindurch zu fließen und in Kontakt mit mindestens einigen der Vielzahl von Starkstrom-Einzelleitern zu kommen; und
(b) Einbringen eines Katalysators in die Vielzahl der Zwischenräume, um die Polymerisation der Chemikalie zur Verbesserung der dielektrischen Eigenschaften zu steuern.

21. Verfahren zur Verbesserung der Eigenschaften eines Durchflusskabels für die Übertragung von Informationen nach Anspruch 20, wobei der Katalysator auf eine Oberfläche der erste Leitungsröhre aufgebracht wird.

22. Verfahren zur Verbesserung der Eigenschaften eines Durchflusskabels für die Übertragung von Informationen nach Anspruch 20, wobei die erste Leitungsröhre (1628) eine Vielzahl von Perforationen aufweist, jede Perforation eine derartige Größe hat, dass es einem vordefiniertem Teil der Chemikalie zur Verbesserung der dielektrischen Eigenschaften möglich ist, jede Perforation zu passieren und in Kontakt mit der Vielzahl von Starkstrom-Einzelleitern (1626) zu kommen.

23. Verfahren zur Verbesserung der Eigenschaften eines Durchflusskabels für die Übertragung von Informationen nach Anspruch 20, wobei die erste Leitungsröhre (1828) aus einem verlitzten Material besteht, das so gewickelt ist, dass es eine röhrenartige Spiralfeder bildet, die röhrenartige Spiralfeder eine Außenseite, eine Innenseite und eine Vielzahl von Fugen aufweist, die sich zwischen den Außenseiten und den Innenseiten erstrecken, die Vielzahl der Fugen es einem vordefiniertem Teil der Chemikalie zur Verbesserung der dielektrischen Eigenschaften ermöglicht, dort hindurch zu treten und in Kontakt mit der Vielzahl von Starkstrom-Einzelleitern (1826) zu kommen.

24. Verfahren zur Verbesserung der Eigenschaften eines Durchflusskabels für die Übertragung von Informationen nach Anspruch 20, wobei die erste Leitungsröhre (1828) im Inneren der Vielzahl von Starkstrom-Einzelleitern angeordnet ist und die erste Leitungsröhre aus einem verlitzten Material besteht, das so gewickelt ist, dass es eine röhrenartige Spiralfeder bildet, die röhrenartige Spiralfeder eine Außenseite, eine Innenseite und eine Vielzahl von Fugen aufweist, die sich zwischen den Außenseiten und den Innenseiten erstrecken, und die es einem vordefinierten Teil der Chemikalie zur Verbesserung der dielektrischen Eigenschaften ermöglichen, durch die Vielzahl der Fugen aus der ersten Leitungsröhre auszutreten, um die Eigenschaften des Durchflusskabels zu verbessern.

25. Durchflusskabel für die Übertragung von Informationen nach Anspruch 1, wobei der Außenmantel (22) aus einer Isolierstoffschicht besteht.

26. Durchflusskabel für die Übertragung von Informationen nach Anspruch 25, weiter umfassend eine Aderumhüllung (34), die koaxial um die informationsführende Kabelader herum angeordnet ist, um die informationsführende Kabelader darin einzuschließen.

27. Durchflusskabel für die Übertragung von Informationen nach Anspruch 25, wobei die erste Leitungsröhre (28) koaxial in der informationsführenden Kabelader (26) angeordnet ist.

28. Durchflusskabel für die Übertragung von Informationen nach Anspruch 25, wobei die erste Leitungsröhre (428) um die Außenseite einer Aderumhüllung (434) herum angeordnet ist.

29. Durchflusskabel für die Übertragung von Informationen nach Anspruch 25, wobei die erste Leitungsröhre (1628) eine Vielzahl von Perforationen aufweist, jede Perforation eine derartige Größe hat, dass es einem vordefiniertem Teil der Chemikalie zur Verbesserung der dielektrischen Eigenschaften möglich ist, alle Perforationen zu passieren und in Kontakt mit der informationsführenden Kabelader zu kommen.

30. Durchflusskabel für die Übertragung von Informationen nach Anspruch 25, wobei die erste Leitungsröhre (1828) aus einem verlitzten Material besteht, das so gewickelt ist, dass es eine röhrenartige Spiralfeder bildet, die röhrenartige Spiralfeder eine Außenseite, eine Innenseite und eine Vielzahl von Fugen aufweist, die sich zwischen den Außenseiten und den Innenseiten erstrecken, die Vielzahl der Fugen es einem vordefiniertem Teil der Chemikalie zur Verbesserung der dielektrischen Eigenschaften ermöglicht, dort hindurch zu treten und in Kontakt mit der informationsführenden Kabelader (1826) zu kommen.

31. Durchflusskabel für die Übertragung von Informationen nach Anspruch 30, wobei die röhrenartige Spiralfeder eine überlappungsfreie Spiralfeder ist.

32. Durchflusskabel für die Übertragung von Informationen nach Anspruch 30, wobei die röhrenartige Spiralfeder eine überlappende Spiralfeder ist, die überlappende Teile und eine Länge aufweist.

33. Durchflusskabel für die Übertragung von Informationen nach Anspruch 32, wobei die überlappenden Teile der röhrenartigen Spiralfeder eine spiralförmige Fuge formen, die sich über die Länge der röhrenartigen Spiralfeder erstreckt, um es einem vordefiniertem Teil der Chemikalie zur Verbesserung der dielektrischen Eigenschaften zu ermöglichen, durch die spiralförmige Fuge hindurchzutreten.

34. Durchflusskabel für die Übertragung von Informationen nach Anspruch 31, wobei die überlappungsfreie Spiralfeder ein elastisches Polymer umfasst, das um die überlappungsfreie Spiralfeder herum angeordnet ist, um ein gleichmäßiges Austreten der Chemikalie zur Verbesserung der dielektrischen Eigenschaften durch die überlappungsfreie Spiralfeder zu ermöglichen.

## Revendications

1. Câble contenant un écoulement pour la transmission d'informations, comprenant:
(a) une gaine (22) présentant une certaine longueur;
(b) au moins une couche d'isolation (24) disposée à l'intérieur de la gaine (22);
(c) un noyau conducteur d'informations (26) disposés à l'intérieur de ladite gaine; et **caractérisé par** la présence:
(d) d'un premier tube de conduit (28) disposé à l'intérieur de ladite au moins une couche d'isolation (24), le premier tube de conduit étant adapté pour permettre à un composé d'amélioration de la performance diélectrique de s'écouler à travers celui-ci et en contact avec le noyau conducteur d'informations (26).

2. Câble contenant un écoulement pour la transmission d'informations selon la revendication 1, dans lequel le premier tube de conduit (28) comprend une pluralité de perforations, chaque perforation étant dimensionnée pour permettre à une partie prédéterminée du composé d'amélioration de la performance de passer à travers chaque perforation et en contact avec le noyau conducteur d'informations (26).

3. Câble contenant un écoulement pour la transmission d'informations selon la revendication 2, dans lequel le noyau conducteur d'informations (26) est constitué d'une pluralité de torons de puissance (36).

4. Câble contenant un écoulement pour la transmission d'informations selon la revendication 1, dans lequel le premier tube de conduit est un toron de matière enroulé pour former un ressort tubulaire (1728), le ressort tubulaire présentant une surface extérieure, une surface intérieure et une pluralité de jointures s'étendant entre les surfaces intérieure et extérieure, la pluralité de jointures permettant à une partie prédéterminée du composé d'amélioration de la performance de passer à travers celles-ci et en contact avec le noyau conducteur d'informations.

5. Câble contenant un écoulement pour la transmission d'informations selon la revendication 4, dans lequel le noyau conducteur d'informations (1726) est constitué d'une pluralité de torons de puissance (1736).

6. Câble contenant un écoulement pour la transmission d'informations selon la revendication 4, dans lequel le ressort tubulaire (1728) est un ressort sans chevauchement.

7. Câble contenant un écoulement pour la transmission d'informations selon la revendication 4, dans lequel le ressort tubulaire (1728) est un ressort avec chevauchement présentant des parties de chevauchement et une certaine longueur.

8. Câble contenant un écoulement pour la transmission d'informations selon la revendication 7, dans lequel les parties de chevauchement du ressort tubulaire (1728) forment une jointure hélicoïdale qui étend la longueur du ressort tubulaire de manière à permettre à une partie prédéterminée du composé d'amélioration de la performance de passer à travers la jointure hélicoïdale.

9. Câble contenant un écoulement pour la transmission d'informations selon la revendication 6, dans lequel le ressort sans chevauchement (1828) comprend une matière élastomère (1842) disposée autour du ressort sans chevauchement de manière à permettre un débordement uniforme du composé d'amélioration de la performance à travers le ressort sans chevauchement.

10. Câble contenant un écoulement pour la transmission d'informations selon la revendication 8, dans lequel le ressort avec chevauchement (1828) comprend une première couche de matière élastomère (1842) disposée autour du ressort avec chevauchement pour limiter sélectivement l'écoulement du composé d'amélioration de la performance à travers le ressort avec chevauchement.

11. Câble contenant un écoulement pour la transmission d'informations selon la revendication 1, dans lequel le noyau conducteur d'informations (1826) est constitué d'une pluralité de torons de puissance (1836) enroulés autour d'un axe central et présentant une pluralité d'espaces interstitiels entre la pluralité de torons de puissance.

12. Câble contenant un écoulement pour la transmission d'informations selon la revendication 11, dans lequel un catalyseur est appliqué à l'intérieur de la pluralité d'espaces interstitiels (2273) du câble contenant un écoulement pour la transmission d'informations pour contrôler la polymérisation du composé d'amélioration de la performance.

13. Câble contenant un écoulement pour la transmission d'informations selon la revendication 12, dans lequel le catalyseur est appliqué à une surface du premier tube de conduit (2228).

14. Câble contenant un écoulement pour la transmission d'informations selon la revendication 13, dans lequel le catalyseur est le tétraisopropyltitanate.

15. Câble contenant un écoulement pour la transmission d'informations selon la revendication 1, comprenant en outre un deuxième tube de conduit (228b) disposé à l'intérieur de la gaine, le deuxième tube de conduit (228b) étant adapté pour permettre au composé d'amélioration de la performance de s'écouler à travers celui-ci et en contact avec le noyau conducteur d'informations.

16. Câble contenant un écoulement pour la transmission d'informations selon la revendication 15, dans lequel le noyau conducteur d'informations est constitué d'une pluralité de torons de puissance (236).

17. Câble contenant un écoulement pour la transmission d'informations selon la revendication 15, dans lequel le premier tube de conduit est un toron de matière enroulé pour former un ressort tubulaire (1828), le ressort tubulaire présentant une surface extérieure, une surface intérieure et une pluralité de jointures s'étendant entre les surfaces intérieure et extérieure, la pluralité de jointures permettant à une partie prédéterminée du composé d'amélioration de la performance de passer à travers celles-ci et en contact avec le noyau conducteur d'informations, et le deuxième tube de conduit est un ressort avec chevauchement présentant des parties de chevauchement et une certaine longueur, dans lequel les parties de chevauchement forment une jointure hélicoïdale qui étend la longueur du ressort tubulaire de manière à permettre à une partie prédéterminée du composé d'amélioration de la performance de passer à travers la jointure hélicoïdale et en contact avec le noyau conducteur d'informations (1826).

18. Câble contenant un écoulement pour la transmission d'informations selon la revendication 17, dans lequel le premier tube de conduit (2162) est logé coaxialement à l'intérieur du deuxième tube de conduit (2128).

19. Câble contenant un écoulement pour la transmission d'informations selon la revendication 1, dans lequel le premier tube de conduit (1628) est disposé à l'intérieur de la pluralité de noyaux conducteurs d'informations, le premier tube de conduit comprenant une pluralité de perforations destinées à permettre à une partie prédéterminée du composé d'amélioration de la performance de se diffuser vers l'extérieur à travers la pluralité de perforations et en contact avec la pluralité de noyaux conducteurs d'informations.

20. Procédé pour améliorer la performance d'un câble contenant un écoulement pour la transmission d'informations, le procédé comprenant les étapes consistant à:
(a) injecter un composé d'amélioration de la performance diélectrique dans le câble contenant un écoulement pour la transmission d'informations, dans lequel le câble contenant un écoulement pour la transmission d'informations comprend une gaine (22), au moins une couche d'isolation disposée à l'intérieur de la gaine, une pluralité de torons de puissance (26) logés à l'intérieur de ladite gaine, une pluralité d'espaces interstitiels (38) entre la pluralité de torons de puissance (26), et un premier tube de conduit disposé à l'intérieur de ladite au moins une couche d'isolation (24), le premier tube de conduit étant adapté pour permettre au composé d'amélioration de la performance diélectrique de s'écouler à travers celui-ci et en contact avec au moins une partie de la pluralité de torons de puissance; et
(b) appliquer un catalyseur à l'intérieur de la pluralité d'espaces interstitiels pour commander la polymérisation du composé d'amélioration de la performance.

21. Procédé pour améliorer la performance d'un câble contenant un écoulement pour la transmission d'informations selon la revendication 20, dans lequel le catalyseur est appliqué à une surface du premier tube de conduit.

22. Procédé pour améliorer la performance d'un câble contenant un écoulement pour la transmission d'informations selon la revendication 20, dans lequel le premier tube de conduit (1628) comprend une pluralité de perforations, chaque perforation étant dimensionnée pour permettre à une partie prédéterminée du composé d'amélioration de la performance de passer à travers chaque perforation et en contact avec la pluralité de torons de puissance (1626).

23. Procédé pour améliorer la performance d'un câble contenant un écoulement pour la transmission d'informations selon la revendication 20, dans lequel le premier tube de conduit (1828) est un toron de matière enroulé pour former un ressort tubulaire, le ressort tubulaire présentant une surface extérieure, une surface intérieure et une pluralité de jointures s'étendant entre les surfaces extérieure et intérieure, la pluralité de jointures permettant à une partie prédéterminée du composé d'amélioration de la performance de passer à travers celles-ci et en contact avec la pluralité de torons de puissance (1826).

24. Procédé pour améliorer la performance d'un câble contenant un écoulement pour la transmission d'informations selon la revendication 20, dans lequel le premier tube de conduit (1828) est disposé à l'intérieur de la pluralité de torons de puissance, et le premier tube de conduit est un toron de matière enroulé pour former un ressort tubulaire, le ressort tubulaire présentant une surface extérieure, une surface intérieure et une pluralité de jointures s'étendant entre les surfaces extérieure et intérieure pour permettre au composé d'amélioration de la performance d'exsuder hors du premier tube de conduit à travers la pluralité de jointures pour améliorer la performance du câble contenant un écoulement.

25. Câble contenant un écoulement pour la transmission d'informations selon la revendication 1, dans lequel la gaine (22) est une couche d'isolation.

26. Câble contenant un écoulement pour la transmission d'informations selon la revendication 25, comprenant en outre un écran de torons (34) reçu axialement autour du noyau conducteur d'informations pour envelopper le noyau conducteur d'informations dans celui-ci.

27. Câble contenant un écoulement pour la transmission d'informations selon la revendication 25, dans lequel le premier tube de conduit (28) est disposé axialement à l'intérieur du noyau conducteur d'informations (26).

28. Câble contenant un écoulement pour la transmission d'informations selon la revendication 25, dans lequel le premier tube de conduit (428) est disposé autour de l'extérieur d'un écran de torons (434).

29. Câble contenant un écoulement pour la transmission d'informations selon la revendication 25, dans lequel le premier tube de conduit (1628) comprend une pluralité de perforations, chaque perforation étant dimensionnée pour permettre à une partie prédéterminée du composé d'amélioration de la performance de passer à travers chaque perforation et en contact avec le noyau conducteur d'informations.

30. Câble contenant un écoulement pour la transmission d'informations selon la revendication 25, dans lequel le premier tube de conduit (1828) est un toron de matière enroulé pour former un ressort tubulaire, le ressort tubulaire présentant une surface extérieure, une surface intérieure et une pluralité de jointures s'étendant entre les surfaces extérieure et intérieure, la pluralité de jointures permettant à une partie prédéterminée du composé d'amélioration de la performance de passer à travers celles-ci et en contact avec le noyau conducteur d'informations (1826).

31. Câble contenant un écoulement pour la transmission d'informations selon la revendication 30, dans lequel le ressort tubulaire est un ressort sans chevauchement.

32. Câble contenant un écoulement pour la transmission d'informations selon la revendication 30, dans lequel le ressort tubulaire est un ressort avec chevauchement présentant des parties de chevauchement et une certaine longueur.

33. Câble contenant un écoulement pour la transmission d'informations selon la revendication 32, dans lequel les parties de chevauchement du ressort tubulaire forment une jointure hélicoïdale qui étend la longueur du ressort tubulaire de manière à permettre à une partie prédéterminée du composé d'amélioration de la performance de passer à travers la jointure hélicoïdale.

34. Câble contenant un écoulement pour la transmission d'informations selon la revendication 31, dans lequel le ressort sans chevauchement comprend une matière élastomère disposée autour du ressort sans chevauchement de manière à permettre une évacuation uniforme du composé d'amélioration de la performance à travers le ressort sans chevauchement.
